# EUROPEAN PATENT APPLICATION

(11) **EP 3 086 274 A1**
(43) Date of publication of application: **26.10.2016**
(21) Application number: 15305598.3
(22) Date of filing: 21.04.2015
(51) Int. Cl.: G06Q 30/06, G06Q 50/00

(54) **METHOD AND DEVICE FOR GENERATING ALERTS**

(71) Applicant: Thomson Licensing, 92130 Issy-les-Moulineaux (FR)
(72) Inventor: BAILLARD, Caroline, 35576 Cesson-Sévigné (FR); ALLEAUME, Vincent, 92443 Issy-les-Moulineaux Cedex (FR); JOUET, Pierrick, 35576 Cesson Sévigné (FR)
(74) Representative: Browaeys, Jean-Philippe

(57) **Abstract**

A client terminal device comprising: a user interface for communication with a user/operable to receive an input from a user and communicate an output to the user; a data capture module for capturing data related to at least one of a product and a location based event; an alert generator configured to automatically generate an alert based on the captured data, for transmission to data communication devices of members of a community linked to the user via a social network; and a transmitter for transmitting the alert to a remote server for transmission to the data communication devices.

## Description

### TECHNICAL FIELD

The present invention relates to a method and device for providing alerts to users linked via a network. The invention further relates to a method and device for collecting data provided by one or more users

### BACKGROUND

As retail services continue to grow and increasingly more services are offered to clients, the information offered to clients is becoming more complex and more abundant. The complexity and abundance of data makes it more difficult to filter through the data to find information relevant to a particular client. Many solutions exist for gathering information that may be more targeted to a potential or existing client, and for providing a better shopping experience to clients in a retail facility. Such techniques include methods for guiding shoppers through a store based on the previous shopping history of the shopper. However, such techniques require up to date information on the layout of a store and the location of products in the store, requiring regular maintenance and upkeep of databases.

The present invention has been devised with the foregoing in mind.

### SUMMARY OF THE INVENTION

According to a first aspect of the invention there is provided a client terminal device comprising: data capture means for capturing data related to at least one of a product and a location based event; alert generating means for generating an alert in response to the captured data; transmission means for transmitting the alert to a remote server for data collection; and guiding means for indicating to a user of the client terminal device a given location, the given location being determined based on at least one of the generated alert and data collected by the remote server from another client terminal.

The other client terminal device may be a data communication device of another user linked to the said user via a network such as for example a social network.

The data may be captured in a retail environment. The alert may be transmitted by the server to at least one other client terminal. The transmission of the alert to the other client terminal may be immediate in response to the generation of the alert.

The alert may comprise at least one of:
an indication that stock of the product is low or exhausted;
an indication that the price of the product has been reduced;
a recommendation of the product;
a user approval of the product;
an indication that an incident has occurred;
an indication that the environment is busy; and
an indication that a product promotional event is taking place.

The given location may be determined based on the location of at least one product, determined to be of potential interest to the user, the at least one product of potential interest to the user being selected from a plurality of available products based on data captured by the data capture module.

The at least one product may be selected from a plurality of available products based on data collected by the remote server and representative of at least one of the group consisting of:
a shopping history of the user of the client terminal and
a shopping history of another user, for example a user linked to the said user by the social network.

In an embodiment the client guiding module comprises a geographical locator for geographically locating the client terminal device. In some embodiments the geographical locator comprises a satellite geographical positioning device. In another embodiment, the geographical locator comprises a radio frequency identification module. For example a RFID chip for interacting with an RFID reader, or an RFID reader for interacting with an RFID chip.

In an embodiment, the guiding module is configured to determine a path to be followed by the user, the path including one or more locations determined to be of potential interest based on at least one of the group consisting of the captured data and data collected by the server from another client terminal

For example, the given path may be determined based on data representative of shopping history of the user of the client terminal. The guiding means may generate navigational instructions based on the determined path.

In an embodiment, the guiding means is operable to guide the user by displaying a map of the environment of the user on a visual display unit of the client terminal device, said map indicating the location of the client terminal device and the location of potential interest to the user.

In an embodiment, the guiding means is operable to generate navigational instructions based on the current location of the user of the client terminal and the location of potential interest to the user. For example, the navigation instructions may be displayed on the visual display unit and/or output as audio data

In an embodiment, the device is configured to indicate the geographical location of one or more members of the social network present in a given environment in which the user is located.

In an embodiment, the data capture module comprises an optical scanner, for example an infra-red type optical scanner; For example, the data capture module may be an optical scanner configured to read a bar code of the product. In another embodiment, the data capture module comprises an RFID device, for example an RFID chip or an RFID chip reader.

In an embodiment, the device is configured receive to an alert via the server, for communication to the user wherein the received alert is based on at least one of the group consisting of the data captured by the data capture module; data collected by the server from another client terminal; data representative of the shopping history of the user and data representative of the shopping history of another user.

In an embodiment, the client terminal device is configured to receive an alert via the server, for communication to the user. In an embodiment the received alert is related to the captured data. The received alert may be an alert generated on another client terminal by another user, for example another user linked to the user by a social network. The received alert may be generated at the server, for example based on data captured from another user. The received alert may be based on the past shopping history of the user and/or the past shopping history of another user linked, for example to the said user by the social network.

The guiding module may be configured to regenerate navigation instructions based on a received alert.

In an embodiment the client terminal device comprises a cancel alert module for canceling an alert generated by the alert generator or an alert received by the user terminal. The alert cancellation may be transmitted to the server for transmission to other client terminal devices

In an embodiment the client terminal is a hand held portable device such as for example a smart phone.

A second aspect of the invention provides a data server comprising:
data collection means for collecting, from a plurality of client terminal devices, data captured by the client terminal devices, the data being related to a product or a location based event;
data clustering means for processing data received from the plurality of client terminal devices to provide product or location based information; and
alert generation means configured to generate an alert based on the processed data for transmission to one or more client terminal devices in response to data collected from one of the client terminal devices

In an embodiment the one or more products are selected from a plurality of available products based on at least one factor from the group consisting of: the previous shopping history of the user associated with the captured data; the shopping history of at least one other user who previously captured data of the said product, and an ingredient list for a recipe including the said product.

In an embodiment the data server may be provided with a community identifier module for communicating with a social network server to identify members of a community linked to the user of the client terminal from which the alert is received.

In an embodiment the generated alert indicates a location of at least one product determined to be of potential interest wherein the at least one product is selected from a plurality of available products based on at least one factor from the group consisting of: the previous shopping history of the user associated with the collected data; the shopping history of at least one other user from which data relating to the said product was collected, and a group of interrelated products including the said product. The group of interrelated products may for example be a list of ingredients of a recipe.

In an embodiment the data server may be provided with a rewarding module configured to determine a reward for the user of the client terminal based on the data collected from the client terminal of the user.

In an embodiment the data server comprises a product association module for associating one or more products related to the captured data.

In an embodiment the one or more products are selected from a plurality of available products based on at least one factor from the group consisting of: the previous shopping history of the user associated with the captured data; the shopping history of at least one other user who previously captured data of the said product, and an ingredient list for a recipe including the said product.

In an embodiment the data server comprises a product locator module for locating the one or more associated products in the given environment.

A further aspect of the invention provides a method for collecting data comprising:
collecting data captured by a client terminal, the captured data being related to a product or a location based event;
performing cluster analysis on data received from a plurality of client terminal devices to provide product or location based information; and
generating an alert based on the captured data for transmission to one or more client terminals in response to an alert received from one of the terminals.

Another aspect of the invention provides a method for generating a user alert the method comprising:
capturing data related to at least one of a product and a location based event;
generating an alert based on the captured data; and
transmitting the alert to a remote server for data collection; and
guiding the user of the client terminal to a location considered to be of potential interest to the user, based on at least one of the captured data and data collected from another client terminal.

According to another aspect of the invention there is provided a client terminal device comprising: a data capture module for capturing data related to at least one of a product and a location based event; an alert generator configured to automatically generate an alert based on the captured data; and a transmitter for transmitting the alert to a remote server for transmission to data communication devices of members of a community linked to the user via a social network.

In an embodiment the client terminal comprises a guiding module for guiding the user to a location considered to be of potential interest to the user based on the captured data.

A further aspect of the invention provides a data server comprising a data collector for collecting, from a client terminal device, data captured by the client terminal, the data being related to a product or a location based event; network identification means for identifying members of a community linked to the said user by a social network; and an alert generator to generate an alert based on the collected data for transmission to the communication devices of the community members linked via social network.

In an embodiment the data server comprises a data cluster module for performing cluster analysis on data received from a plurality of client terminal devices to provide product or location based information.

In an embodiment the data server comprises a database generated from the collected data, for providing information on a product or event.

A further aspect of the invention provides a method for collecting data comprising: collecting data captured by a client terminal, the collected data being related to a product or a location based event; communicating with a social network server to identify members of a community linked to the said user by a social network; and generating an alert based on the captured data for transmission to the communication devices of the community members linked via the social network

A further aspect of the invention provides a method for providing an alert comprising: capturing data related to at least one of a product and a location based event; generating an alert based on the captured data; and transmitting the alert via a communication interface to a remote server for transmission to data communication devices of members of a community linked to the user via a social network.

A further aspect of the invention provides an client terminal comprising memory, one or more processors; and one or more modules stored in the memory and configured for execution by the one or more processors, the one or more modules including instructions for generating a user alert based on captured data related to a product or event and transmitting the user alert to a remote server for transmission to data communication devices of members of a community linked to the user via a social network.

A further aspect of the invention provides a computer readable memory including instructions, that when executed by a processor of a portable device, cause the device to perform operations comprising generating a user alert based on captured data related to a product or event and transmitting the user alert to a remote server.

Another aspect of the invention provides a client terminal device comprising: a data capture module for capturing data related to at least one of a product and a location based event; an alert generator configured to automatically generate an alert based on the captured data; a transmitter for transmitting the alert to a remote server for data collection; and a guiding module for guiding a user of the client terminal to a location determined to be of potential interest, based on at least one of the generated alert and data collected by the remote server from another client terminal.

Another aspect of the invention provides a data server comprising:
a data collector for collecting, from a plurality of client terminal devices, data captured by the client terminal, the data being related to a product or a location based event; a data cluster module for performing cluster analysis on data received from a plurality of client terminal devices to provide product or location based information; and an alert generator configured to generate an alert based on the collected data for transmission to one or more client terminals in response to an alert received from one of the client terminals

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
FIG. 1 is a schematic block diagram of a data communication system for enabling distribution of customer alerts to members of a social network, according to an embodiment of the invention;
FIG. 2 is a schematic block diagram of a client terminal for enabling distribution of customer alerts to members of a social network, according to an embodiment of the invention;
FIG. 3 is a schematic block diagram of a data sever for enabling distribution of customer alerts to members of a social network, according to an embodiment of the invention; and
FIG; 4 is a flow chart illustrating steps of a method for enabling distribution of customer alerts to members of a social network, according to an embodiment of the invention.

### DETAILED DESCRIPTION

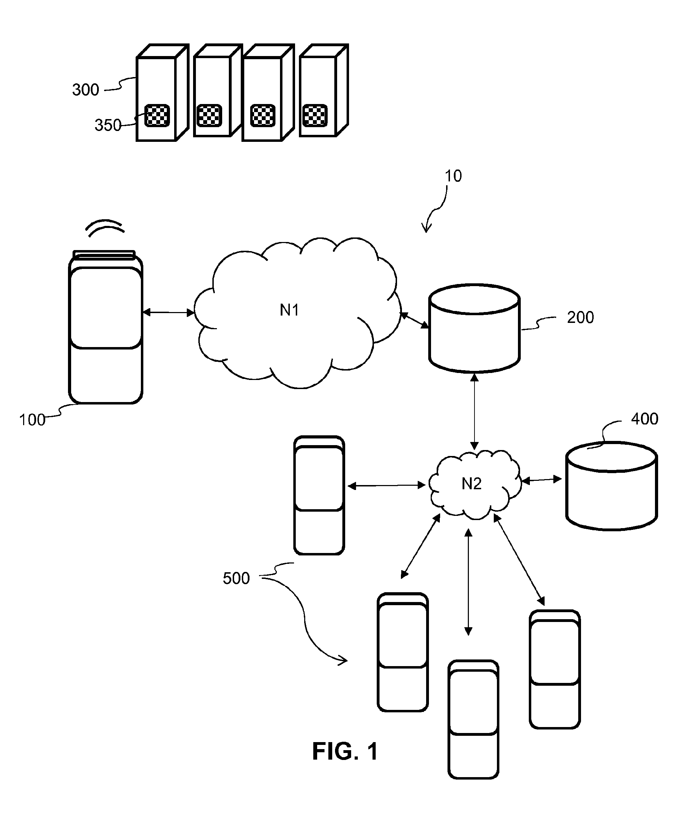

Figure 1 is a schematic block diagram of an embodiment of a data communication system for the generation and management of alerts. The data communication system 10 is a distributed system comprising one or more client terminals 100, connected via a network N1 to one or more servers 200. The data communication network N1 may be a Wide Area Network (WAN) or a Local Area Network (LAN), for example. Such a network may be for example a wireless network (Wifi / 802.11a or b or g), an Ethernet network, an Internet network or a mixed network composed of several different networks, wired or wireless. Each server 200 may be associated, for example, with a given facility, such as for instance a retail facility.

Products 300 within the retail facility are provided with an identification tag 350. In some embodiments of the invention, a group of similar products may be provided with a common tag for identification of the product. In other embodiments of the invention, each product may be provided with a respective tag providing data for identification of the product. In some embodiments of the invention, the tag 350 comprises a bar code (for example a 1 D barcode or a 2D data matrix barcode) which may be scanned optically by the client terminal 100 to read an identification code of the corresponding product or products 300. In another embodiment of the invention, the tag 350 comprises an RFID (radio frequency identification) chip readable by an RFID reader of the client terminal 100 to identify the corresponding product or products. As well as data identifying the corresponding product or products, data included in the tag 350 may also include other data related to the product 300, such as for example a price of the product, a customer rating of the product or the like.

Server 200 is connected via network N2 to a network server 400 which in turn is connected to user communication devices 500 of members of a network, for example a social network hosted by the network server 400. Network N2 may be for example a wireless network (Wifi / 802.11a or b or g), an Ethernet network, an Internet network or a mixed network composed of several different networks, wired or wireless. In some embodiments of the invention N1 and N2 may form part of the same data communication network.

Although in the illustrated example the user communication devices 500 are smart phone type communication devices, it will be appreciated that the user communication device may be any type of data communication processor device, such as a fixed computer terminal, laptop, tablet computer or the like.

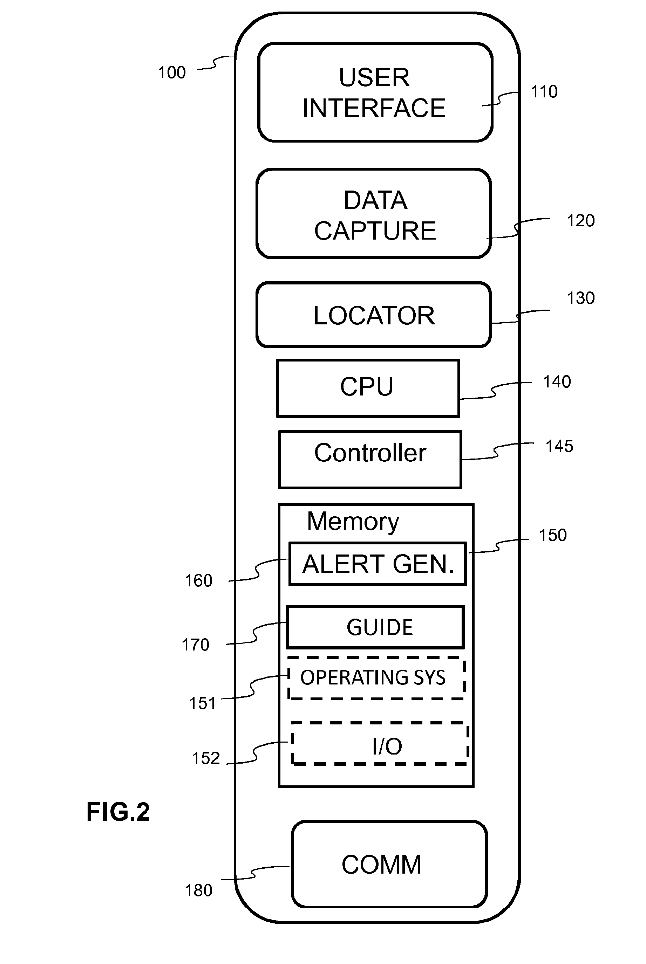

Figure 2 is a block diagram of a client terminal 100 for generation and communication of user alerts in accordance with an embodiment of the invention.

The client terminal 100 may be a handheld computer provided in the retail facility and dedicated to data capture related to products or events by users, or the client terminal 100 may a portable personal electronic device of the user, for example a hand held computer such as a smart phone, a tablet computer, a personal digital assistant (PDA) provided with an application for data capture of products or events of the retail facility.

The client terminal 100 comprises a user interface 110 operable to receive an input from a user, and, where appropriate, to communicate an output to the user. For example, the user interface 110 may comprise a touch sensitive screen sensitive to a user's touch or to contact with a pointing device. The touch screen 110 and any associated processing circuitry detect contact on the touch screen and convert the detected contact into one or more instructions to be executed by processing circuitry. The touch sensitive screen may display keys or buttons for receiving contact to provide an input. The touch sensitive screen may also display information, for example product or event information to the user. In other embodiments of the invention, the user interface 110 may comprise a keypad in the form of physical keys, a mouse or a scroll object for navigating on a separate visual display unit of the user interface 110. The user interface 110 may be used by the user to input one or more of the following information items: user ID, data to generate the user alert, for example: user viewpoint on a product, recommendation of a product, notification of an event, or comment on an event or product.

The client terminal 100 further comprises a data capture module 120 for capturing data representative of a product or an event, such as a location based event.

In some embodiments of the invention, the data capture module 120 comprises an optical scanner for scanning the tag 350 of a product 300, or for directly scanning the product 300 itself, for example by scanning a product label on the product which may be used to identify the product 300. For instance, the optical scanner may be provided in the form of a camera on a smart phone or computer tablet. Image analysis may be performed by a processing module 140 on a photo captured of the product, for example to identify a characteristic label or feature of the product, or on a photo captured of the tag 350 associated with the product 300, for example the bar code on the tag 350 of the product, to identify the product.

Alternatively, the data capture module 120 may be an optical scanner using infra-red light to scan a bar code provided on the tag 350 associated with a particular product 300.

In some embodiments, the data capture module 120 receives from the user interface 110 data input by the user. For example, the data input by the user may include the product ID, such as a product code or product name.

The client terminal 100 is further provided with a geographical locator 130. The geographical locator 130 may be a satellite based location module communicating with a satellite locating system such as GPS (geographical positioning system) to provide geographical co-ordinates for locating the geographical position of the client terminal 100. In further embodiments of the invention the geographical locator 130 may comprise an RFID chip configured to interact with RFID readers located around the retail facility, or alternatively an RFID reader configured to interact with RFID chips located around the retail facility.

The client terminal 100 further comprises memory 150, a memory controller 145 and processing circuitry 140 comprising one or more processing units (CPU(s)) for processing data received from data capture unit 120. The one or more processing units 140 run various software programs and/or sets of instructions stored in the memory 150 to perform various functions for the client terminal 100 and to process data.

Software components stored in the memory include an alert generator module (or set of instructions) 160 and a guide module (or set of instructions) 170. Other modules may be included such as an operating system module 151 for controlling general system tasks (e.g. power management, memory management) and for facilitating communication between the various hardware and software components of the client terminal 100, and an interface module 152 for controlling and managing communication with other devices via I/O interface ports.

The alert generator module 160 is configured to generate an alert based on the data captured by data capture unit 120 related to a product or a location based event.

Product related alerts generated by the alert generator module 160 may include alerts indicating:
- product running-low: if the number of items of a product is low;
- product out-of-stock: if a product is out of stock;
- product pricing-problem: if there is a problem in the pricing of the product (e.g. price erroneous or not displayed);
- product location-problem: if a product item is found in the wrong place (for example, a customer may pick up a product and then leave it at a random place within the retail facility),
- product on promotion: if there is a promotion or offer on a certain product,
- user viewpoint on product, for example, "like" / "don't like"

A number of predefined alerts, such as for example, one or more of the alerts listed above, may be provided on a displayed menu of the user interface 110, allowing the user to simply press on a displayed box indicating the desired alert. In this way a desired alert associated with the product whose identity is captured by data capture module 120 may be automatically generated.

An alert generated by the alert generator module 160 for a location based event may indicate one or more of the following events at a particular location:
- an accident; for example an alert indicating a spill on the floor at a particular location;
- a promotional event at a particular location for example an alert indicating a product tasting, a product demonstration, or the like,
- traffic at a particular location: for example an alert indicating there is heavy traffic in an aisle or an obstacle blocking access;
- queue at a particular location: for example an alert indicating that there are long queues at the check-out till or there is a long queue at a particular counter such as, for example a cheese counter, meat counter

The guiding module 170 is configured to locate the client terminal 100 within the retail facility on the basis of location data provided by the geographical locator 130. In some embodiments of the invention, the guiding module 170 is configured to generate a map of the retail facility for display on a visual display unit of the client terminal 100 and indicates on the map, the location of the client terminal 100 and the location of one or more products of interest or a location based event. The one or more products of interest may be determined based on data captured by data capture module 120 or on previous shopping history of the user.

In some embodiments, the guiding module 170 is configured to generate navigational instructions to guide the user from the current identified location of the client terminal 100 to the location of a product or event within the retail facility. The navigational instructions may be displayed for example on a visual display unit of the client terminal 100, and/or may be played by audio to the user of the client terminal.

The guiding module may be configured to determine a given path through the retail facility, the path including locations of products determined to be of potential interest to the user, for example based on shopping history of the user or related to the product from which data is captured.

Communication circuitry 180 is used to transmit the alert data to remote server 200. The communication circuitry includes an antenna for sending and receiving electromagnetic waves and RF (radio frequency) circuitry for converting electromagnetic signals into electrical data signals and for converting electrical data signals into electromagnetic signals. The RF circuitry may include for example an RF transceiver, one or more amplifiers, a tuner, one or more oscillators and a digital signal processor.

Data representative of a product related alert for transmission by the communication circuitry 180 to the remote server 200 may include data identifying the product e.g. a product name or code, and data representative of information related to the product such as for example one of the above mentioned indications e.g. production on promotion. The alert may be represented by an alert code. Further data transmitted from the client terminal 100 to the server 200 may include one or more of the following parameters, product price, user ID (identifying the user of the client terminal 100), location of user, time of alert. For example, a data stream transmitted to the server based on data captured by data capture module 120 may include {ProductCode, Alert, UserName, X, Y, T}, or {ProductCode, product price,

UserName, X, Y, T}.

In some embodiments of the invention an alert cancellation function is provided on the client terminal 100 for cancelling an alert generated by the user of the client terminal or to cancel an alert previously generated by another user. The function may for example be a cancel alert button on the user interface. The alert cancellation is transmitted to the server 200. The server may transmit information of the alert cancellation to other user devices 500. The user by means of the user interface 110 can confirm or cancel an active alert. For example:
- if a client scans a product 300 or the tag 350 of a product 300 associated with an alert previously generated by another user for example a "product running-low", "product pricing-problem" or "product promotion" alert, the client is prompted by the client terminal 100 to confirm or cancel the previously generated alert which is still active - the client can then confirm or cancel according to his perception, for instance there may be items of product available signifying that the "product running low" alert previously generated is erroneous or is no longer valid;
- if a client scans a product 300 or the tag 350 of a product 300 associated with a previously generated "out-of-stock" alert, the alert may be automatically cancelled since the presence of the product indicates stock of the product - however the user may reinstate the alert if for example the product scanned is the last product;
- if a client approaches an area where an "accident", "promotional event", "traffic" or "queue" alert is located, the client is prompted by the client terminal 100 to confirm or cancel the alert according to his perception of the event.

In some embodiments of the invention, the client terminal 100 may be provided with a function, such as a cancel alert button on the user interface, enabling the client to cancel an alert that he himself has generated, before or after the associated data is sent to the server 200.

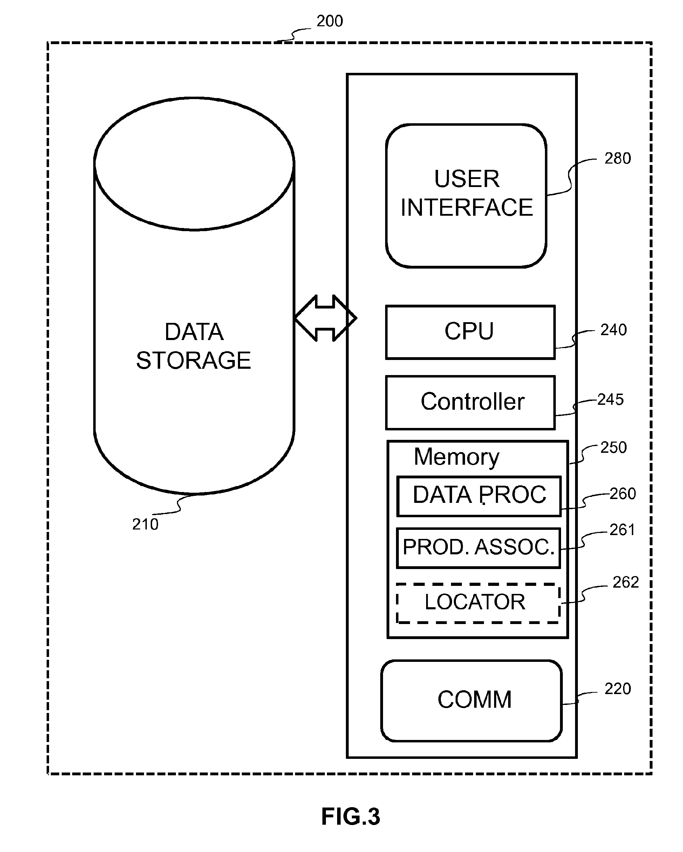

Figure 3 is a block diagram of a server 200 configured to receive and store data received from the client terminal 100. The server 200 comprises a database 210 for storing data related to products, events and/or clients, including data collected from the client terminals 100. The collected data provides information about the products sold in the retail facility and about any location-based events related to the retail facility.

The server 200 is provided with a communication module 220 for receiving data transmitted from the client terminals 100. The communication module 220 is connected to data communication network N1 for communication with client terminals 100. The server 200 further comprises memory 250, a memory controller 245 and processing circuitry 240 comprising one or more processing units (CPU(s)) for processing data received via the communication module. The one or more processing units run various software programs and/or sets of instructions stored in the memory 250 to perform various functions for the client terminal and to process data.

Software components stored in the memory include a data processing module (or set of instructions) 260 for processing the collected data, a product association module 261 for associating an identified product with one or more other products, and a locator module 262 for locating products and events within a retail facility and for computing client routes through a retail facility. Other modules may be included such as an operating system module (not shown) for controlling general system tasks (e.g. power management, memory management) and for facilitating communication between the various hardware and software components of the server 200, and an interface module (not shown) for controlling and managing communication with other devices via I/O interface ports.

A user interface 280 enables a user to input data to the database, to control the data processing performed or to visualize on a display unit data from the data base.

When a client scans a product 300 or a product tag 300 and generates an alert, the product's identity and other information such as the product's price, the cmient identity, current position and the current time {*ProductName, ProductPrice, UserName, X, Y, T*} are sent by the client terminal 100 to the server 200 and received via the communication module 220 of the server 200. The received data is processed by data processor 260 where appropriate and stored in the database 210. The data collection can be performed automatically when the product is scanned by the customer with the client terminal 100.

From social network information provided by social network server 400, data from the user generated alerts of a first user may be transmitted to user terminals 500 of members linked to the first user by a social network. The data may be transmitted from the server 300 to the user terminals 500 or, in some embodiments of the invention, via the social network server 400. In this way other users linked to the first user may be informed of product related information or events such as products on promotion, product price, a product recommendation etc. by alerts generated by the first user.

In some embodiments of the invention, the data collected and stored in database 210 can be made publicly available to users, for example by Internet access. In other embodiments of the invention, the transmission of all or part or all of the data may be restricted to the retail facility or to authorized users.

Within the retail facility, the data collected from the client terminals 100 can be used for a number of purposes including providing assistance to shoppers or providing assistance to store management.

Services for assisting a client of the retail facility based on the generation of alerts by users of the retail facility may include one or more of the following:
- enabling the client to access up-to-date information in real-time on products or events within the retail facility. In particular providing information generated by another user connected via a social network to the client. The information may be displayed on a visual display unit of the client terminal 100 of the user, for example in the form of a map with product(s) and or event(s) related to one or more user generated alerts indicated.
- indicating location-based events to the client, to enable the client to adapt his path through the retail facility accordingly, for example by indicating one or more of the following location related events on a displayed map:

- incidents;
- promotional events;
- high traffic areas;
- queue alerts
- product recommendation:
- current promotional offers
- current top community-based "I like" recommendations (best rank over the last week or the last month for instance)
- current most purchased product(s) of every section

The location based events may be related to alerts generated by the present user or by a previous user, in particular a previous user linked via a social network to the present user.

In some embodiments of the invention, a product association function 261 may be activated/updated when a user scans a product 300 product tag 350, or inputs items of a shopping list. Product association module 261 identifies one or more products of the retail facility associated with the product identified in the user generated alert received, and generates a list of one or more of the interrelated products as suggestions to the user. Data indicating associated products are sent to the user terminal. Products may be considered to be associated with other products in one or more of the following ways:
- products often bought together: for example a suggestion such as "people that bought product X also bought product Y" may be generated when an alert related to product X is generated
- products often related to one another in recipes (possibly recommendation-based)

Other functions may be performed by the product association module 261 to provide a service to the user based on products associated with the product related to the user generated alert: for example a related recipe ingredient list compiler may be provided enabling a list to be automatically generated of products for a given recipe based on a product scanned by the user; The location of the products identified in the generated ingredient list may be indicated on a map of the retail facility displayed on a visual display unit of the client terminal 100.

Moreover, based on user generated alerts, current low-stock products may be located by a product/event locator module 262 and indicated on a map displayed on the client terminal 100 to the user enabling the user to prioritize picking up low stocked products before better stocked products.

Given a particular shopping list input to the client terminal 100 by the user, real-time location-based and product-based information can be used for up-to-date optimal route computation through a facility - the computed route may be continuously updated according to the current user location and user generated alerts, taking in particular into account one or more of the following:
- the current location of the products on a shopping list
- the current availability of the products on a shopping list
- the current accessibility of the store sections as determined from the user generated alerts.

In some embodiments the route maybe computed at the server 200 by locator module 262. In other embodiments the route may be computed locally at the client device 100 by the guide module 170 of the client terminal 100.

Given a particular product or a shopping list provided by the client, which may for example be input to the client terminal 100 via the user interface 110, the user can obtain in real-time one or more the following information items on a map displayed on the visual display unit of the client terminal 100:
- the current location of a product. The current location of the product may be based on alerts generated by other users. In order to deal with potentially erroneous data (for example, customers scanning products at the wrong place) and potential multiple locations of the same product (in case of promotions for instance), a robust cluster analysis may be performed to indicate:
- the current price of the product as most recently scanned by other users
- the current active alerts on the desired product (for example "running-low", "out-of-stock", "on promotion" etc.
- the current community-based "I like" / "I like not" recommendations on the requested product(s) (for example based on user viewpoints generated over the last week or the last month for instance), in particular of users connected to the current user via a social network.

Based on social network information from the social network server 400, other users connected to the client via a social network who are within the retail facility may be identified, located and indicated on the displayed map displayed to the user. Thus by using social network connections, the user can find and locate other users present inside the retail facility. The geographical location of the other user may be provided by the locator module 130 of the client terminal 100 used by the other user.

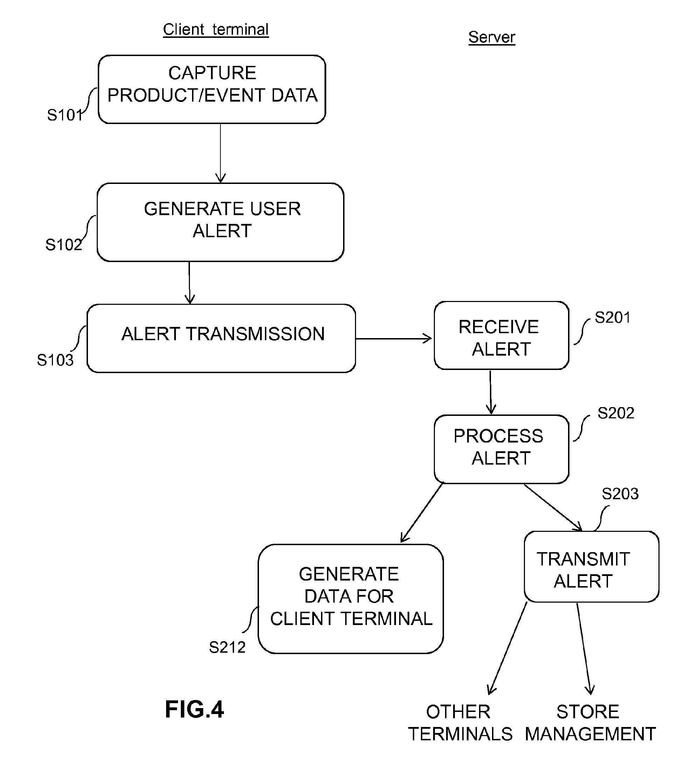

Figure 4 illustrates steps of a method for distributing user alerts in accordance with one or more embodiments of the invention.

At the client terminal of the client, in step S101 data relating to a product or event is captured by the data capture module 120 of the client terminal. As mentioned above, the data capture module 120 may capture the data directly by scanning the product or product tag with an optical scanner or photo capture unit, by means of an RFID chip or by capturing data input by the user via the user interface 110.

In step S102 a user alert is generated by the alert generator module 160 based on the data captured by the client device 100 in step S101. In step S103 data representative of the user generated alert is transmitted to server 200.

At the server side, the user generated alert is received in step S201 and processed in step S202. From the processed alert, data stored in the database 210 can be updated. In step S203 the alert can be transmitted to the data communication device 500 of one or more other terminals, for example to client terminals of users linked to the initial user by a social network. The transmission may be directly from the server 200 or via the social network server 400.

In step S212 data is generated for transmission to the client terminal 100. The data may be related to the alert generated by the user. For example the server may provide price data, stock data or delivery data related to a product scanned initially by the user. Alerts may also be sent from the server to the user to alert the user of product events or location based events. The alerts sent from the server to the client terminal 100 may be based on alerts generated by other users and received at the server from other client terminals or alerts generated at the server. The data may be based on the shopping history of the user of the client terminal or the shopping history of another user, for example another user linked to the said user via the social network.

Some additional functions may be provided on the client terminal 100 of the client for example:
- visualization of the client moving in real time on the map with a particular "fun" icon of his choice
- visualization of the retail facility in 3D
- possibility of viewing the products in 3D (using community-based or pre-recorded 3D scans)

The range of available functions may, for example be made dependent on the number of points gained by the user, according to a reward system as described below.

Functions provided by the collection of the user alerts for assisting staff of the retail facility include the provision of up-to-date alerts to the staff enabling better staffing management for incidents to be resolved as soon as possible (for example sending additional staff, refilling stock, etc). Issues to be resolved may be indicated by user generated alerts such as
- "Running-low" or "out-of-stock" alerts on products
- "pricing-problem" alerts on product
- "location- problem" alerts on products
- "Accident" alerts
- "queue" alerts
- traffic occurrence alerts

In addition, using the data collected from the user alerts, a crowd-sourced inventory assistance tool for the store (location and stock of the products) may be provided.

Moreover the data collected from the customer alerts may be used for statistical marketing analysis. Such analysis could be coupled with the user profile: age, gender, professional category, marital status, shopping history from the social network profile and process data from the alerts to provide community-based opinions such as "Like / Don't like". Moreover from the alerts customer trajectory and purchase timing statistics may be obtained.

In some embodiments of the invention, the collected data may be processed for targeted recommendations adapted to current location & purchase, and matching the profile of the particular client.

In some embodiments of the invention, 3D models of scanned products, which can be used for further applications such as e-commerce or interactive advertisement may be generated from the data of the user generated alerts.

In some embodiments of the invention, a reward system may be managed by the retail service. By means of rewards a client could be encouraged to collect data for the database using the data capture unit 120 of the client terminal 100. Each time a user collects a particular type of data using the client terminal, he can gain a particular number of reward points. In some embodiments the user could similarly be encouraged to go via a specific path, to increase the visibility of a promotional event for instance, with for instance bonus points when he goes past a particular location in a retail facility.

The user may also be encouraged to buy specific products, or buy products in general, with for instance a bonus for each purchase of a promoted product. According to the total number of points a user obtains, the user can access financial rewards, presents, special offers, and premium-only services (icons, alerts and functions only available for premium users) or be provided with further services or functionalities.

This reward system has many benefits: it rewards the best users, it makes shopping more attractive by entertaining the user (similarly to a game), and it secures the loyalty of the customers while generating up to date information for the retail facility.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

The embodiments described herein may be implemented in, for example, a method or a process, an apparatus, a software program, a data stream, or a signal. Even if only discussed in the context of a single form of implementation (for example, discussed only as a method), the implementation of features discussed above may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described embodiments. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired and/or wireless links, as is known. The signal may be stored on a processor-readable medium.

## Claims

1. A client terminal device comprising:
data capture means for capturing data related to at least one of a product and a location based event;
alert generating means for generating an alert in response to the captured data;
transmission means for transmitting the alert to a remote server for data collection; and
guiding means for indicating to a user of the client terminal device a given location, the given location being determined based on at least one of the generated alert and data collected by the remote server from another client terminal.

2. A client terminal device according to claim 1, wherein the other client terminal device is a data communication device of another user linked to the said user via a social network.

3. A client terminal device according to any preceding claim, wherein the given location is determined based on the location of at least one product selected from a plurality of available products based on data captured by the data capture module.

4. A client terminal device according to claim 3, wherein the at least one product is selected from a plurality of available products based on data previously collected by the remote server and representative of at least one of the group comprising: a shopping history of the user of the client terminal and a shopping history of another user.

5. A client terminal device according to any preceding claim wherein the guiding module is configured to determine a route from the current location of the client terminal device to the said determined location the route including one or more further locations, each further location being determined based on at least one of the group consisting of the captured data and data collected by the server from another client terminal device.

6. A client terminal device according to any one of claims 2 to 5, configured to indicate the geographical location of one or more client terminal devices associated with one or more members of the social network present in a given environment in which the user is located.

7. A client terminal device according to any preceding claim, configured to receive an alert via the remote server, for communication to the user wherein the received alert is based on at least one of the data captured by the data capture module; data collected by the server from another client terminal; data representative of the shopping history of the user and data representative of the shopping history of another user.

8. A client terminal device according to any preceding claim further comprising a cancel alert module for canceling an alert generated by the alert generator or an alert received by the user terminal in response to data captured by the data capture module.

9. A data server comprising:
data collection means for collecting, from a plurality of client terminal devices, data captured by the client terminal devices, the data being related to a product or a location based event;
data clustering means for processing data received from the plurality of client terminal devices to provide product or location based information; and
alert generation means configured to generate an alert based on the processed data for transmission to one or more client terminal devices in response to data collected from one of the client terminal devices

10. A data server according to claim 9, wherein the alert indicates a location of at least one product selected from a plurality of available products based on at least one factor from a group comprising: the previous shopping history of the user associated with the collected data; the shopping history of at least one other user from which data relating to the said product was collected, and a group of interrelated products including the said product.

11. A data server according to claim 9 or 10 comprising a community identifier module for communicating with a social network server to identify members of a community linked to the user of a client terminal from which data is collected.

12. A data server according to any one of claims 9 to 11 further comprising a rewarding module configured to determine a reward for the user of the client terminal based on the data collected from the client terminal of the user.

13. A method performed by a server comprising:
collecting data captured by a first one of a plurality of client terminal devices, the captured data being related to a product or a location based event;
processing the captured data and data collected from others of the plurality of client terminal devices to provide product or location based information; and
generating an alert based on the provided product or location based information for transmission to one or more client terminal devices in response to data collected from at least one of the client terminal devices

14. A method for generating a user alert, the method comprising:
capturing data related to at least one of a product and a location based event;
generating an alert based on the captured data; and
transmitting the alert to a remote server for data collection and for transmission to another client terminal device; and
guiding a user of the client terminal to a location determined to be of potential interest, based on at least one of the generated alert and data collected by the remote server from another client terminal.

15. A computer program product for a programmable apparatus, the computer program product comprising a sequence of instructions for implementing a method according to claim 13 or 14 when loaded into and executed by the programmable apparatus.
